# EUROPÄISCHE PATENTSCHRIFT

(11) **EP 3 789 513 B1**
(45) Veröffentlichungstag und Bekanntmachung des Hinweises auf die Patenterteilung: **21.06.2023**
(21) Anmeldenummer: 19201679.8
(22) Anmeldetag: 07.10.2019
(51) Int. Cl.: C23C 4/12, C23C 4/123, C23C 4/134, C23C 24/10, B05B 7/22, B05B 13/02, B05B 14/30, B23K 26/08, B23K 26/16, B23K 26/342, B05B 13/04, B05B 16/20, B22F 3/00, B22F 3/115, B22F 7/02, B22F 7/08, B22F 10/28, B22F 12/00, B22F 12/55, B23K 26/144

(54) **BESCHICHTUNGSVORRICHTUNG UND VERFAHREN ZUM METALLISCHEN BESCHICHTEN VON WERKSTÜCKEN**
COATING DEVICE AND METHOD FOR METALLIC COATING OF WORKPIECES
DISPOSITIF DE REVÊTEMENT ET PROCÉDÉ DE REVÊTEMENT MÉTALLIQUE DE PIÈCES

(30) Priorität: 09.09.2019 EP 19196156; 27.09.2019 EP 19200051; 27.09.2019 EP 19200059
(43) Veröffentlichungstag der Anmeldung: 10.03.2021
(73) Patentinhaber: Sturm Maschinen- & Anlagenbau GmbH, 94330 Salching (DE)
(72) Erfinder: MARTIN, Carlos, 94469 Deggendorf (DE); BAIER, Roland, 93077 Bad Abbach (DE)
(74) Vertreter: Wunderlich & Heim Patentanwälte Partnerschaftsgesellschaft mbB

(56) Entgegenhaltungen:
- EP-A1- 0 661 127
- CN-A- 104 388 929
- CN-A- 107 904 591
- JP-A- 2018 069 266
- JP-U- H0 683 177
- US-A1- 2006 272 909
- US-A1- 2014 186 549

## Beschreibung

Die Erfindung betrifft eine Beschichtungsvorrichtung zum metallischen Beschichten von Werkstücken, mit einem Gehäuse, welches einen Arbeitsraum umschließt, einer Halteeinrichtung zum Halten mindestens eines Werkstücks in dem Arbeitsraum, mindestens einer Auftragseinrichtung mit einer Auftragsdüse zum Aufbringen eines Metallpulvers auf eine zu beschichtende Werkstückfläche und einen Laser zum lokalen Aufschmelzen des Metallpulvers auf der Werkstückfläche zum Bilden einer Beschichtung, mindestens einer Bewegungseinrichtung, mit welcher die mindestens eine Auftragseinrichtung beim Beschichten relativ zur Werkstückfläche bewegbar ist, mindestens einer Luftzuführung und mindestens einer Luftabführung, gemäß dem Oberbegriff des Anspruches 1.

Die Erfindung betrifft weiterhin ein Verfahren zum metallischen Beschichten von Werkstücken, bei dem mindestens ein Werkstück mit einer Halteeinrichtung in einem Gehäuse in einem Arbeitsraum gehalten wird, eine Werkstückfläche mit mindestens einer Auftragseinrichtung beschichtet wird, wobei mit der Auftragsdüse der mindestens einen Auftragseinrichtung ein Metallpulver auf eine zu beschichtende Werkstückfläche aufgebracht und mittels eines Lasers der mindestens einen Auftragseinrichtung das aufgebrachte Metallpulver lokal auf der Werkstückfläche aufgeschmolzen wird, wobei sich eine metallische Beschichtung bildet, die mindestens eine Auftragseinrichtung beim Beschichten mittels mindestens einer Bewegungseinrichtung relativ zur Werkstückfläche bewegt wird, und über mindestens eine Luftzuführung Luft in den Arbeitsraum zugeführt und über mindestens eine Luftabführung Luft aus dem Arbeitsraum abgeführt wird, gemäß dem Oberbegriff des Anspruches 11.

Derartige Beschichtungsvorrichtungen und Verfahren zum metallischen Beschichten von Werkstücken sind als ein sogenanntes Laserauftragsschweißen bekannt. Hierbei wird auf ein metallisches Werkstück ein Pulver aufgebracht, welches lokal mittels eines Lasers aufgeschmolzen wird. Das aufgeschmolzene Metallpulver bildet auf der Werkstückoberfläche eine Beschichtung, welche insbesondere besonders verschleißfest oder korrosionsbeständig sein kann. Das Verfahren wird dabei in einem abgeschlossenen Arbeitsraum der Beschichtungsvorrichtung durchgeführt, wobei insbesondere zur Kühlung Luft in den Arbeitsraum eingeleitet und wieder ausgeleitet wird.

Aus der gattungsbildenden JP-H 06 83 177 U geht eine Beschichtungsvorrichtung hervor, bei der an einer Auftragsdüse Gas zum Auftragen von Pulver zugeführt und unverbrauchtes Pulver über zwei Abführleitungen zu einem Staubabscheider abgesaugt werden. Die JP-H 0683 177 U offenbart die Merkmale des Oberbegriffs der Ansprüche 1 und 11.

Der Erfindung liegt die **Aufgabe** zugrunde, eine Beschichtungsvorrichtung und ein Verfahren zum metallischen Beschichten von Werkstücken anzugeben, mit welchen Werkstücke besonders effizient beschichtet werden können.

Nach der Erfindung wird die Aufgabe zum einen durch eine Beschichtungsvorrichtung mit den Merkmalen des Anspruches 1 und zum anderen mit einem Verfahren mit den Merkmalen des Anspruches 11 gelöst. Bevorzugte Ausführungsformen der Erfindung sind in den jeweils abhängigen Ansprüchen angegeben.

Eine Grundidee der Erfindung kann darin gesehen werden, das Werkstück beim Beschichten nicht nur effizient zu kühlen, sondern auch ein ausreichendes Entfernen von nicht aufgeschmolzenem Metallpulver und Staub aus dem Arbeitsraum sicherzustellen. Dies wird gemäß einem ersten Aspekt der Erfindung dadurch erreicht, dass die Luftzuführung zum Werkstück und die Luftabführung aus dem Arbeitsraum vom Werkstück weg erfolgt. Erfindungsgemäß ist die Luftzuführung oberhalb des Werkstücks und die Luftabführung unterhalb des Werkstücks. So kann eine gezielte und definierte Umströmung des Werkstücks durchgeführt werden.

Gemäß einer weiteren Ausführungsform der Erfindung kann eine zusätzliche Absaugeinrichtung mit mindestens einer Absaugöffnung vorgesehen sein, die nahe am Werkstück angeordnet ist. Die Abfuhr von nicht aufgeschmolzenem Metallpulver wird somit nicht durch die normale Luftzu- und Abführung allein durchgeführt, sondern es ist zusätzlich eine Absaugeinrichtung vorgesehen, mit welcher mit hoher Zuverlässigkeit Metallpulver und Staub unmittelbar am Werkstück entfernt wird. Dabei können auch beim Beschichten entstehende Gase zuverlässig abgeführt werden, was sich ebenfalls positiv auf die Beschichtungsqualität auswirkt. Die Luftführung kann auch alleine vorgesehen sein.

Eine bevorzugte Ausführungsform der Erfindung besteht darin, dass die zu beschichtende Werkstückfläche horizontal angeordnet ist. Eine horizontale Anordnung der Werkstückfläche erlaubt insbesondere einen besonders sparsamen Einsatz von Metallpulver. Diese kann so auf die Werkstückfläche aufgetragen werden, dass es zunächst auf der horizontal gerichteten Werkstückfläche liegenbleibt. In dieser Position kann es zielgerichtet durch den Laser aufgeschmolzen werden. Unverbrauchtes Metallpulver oder Staub können durch die erfindungsgemäße Absaugeinrichtung bedarfsgerecht abgeführt werden, so dass der Laser die Oberfläche weitgehend ungehindert beaufschlagen kann.

Nach einer alternativen Anordnung einer erfindungsgemäßen Beschichtungsvorrichtung ist es vorteilhaft, dass die zu beschichtende Werkstückfläche vertikal angeordnet ist. Bei einer vertikalen Anordnung, bei welcher die Werkstückfläche in etwa in Schwerkraftrichtung ausgerichtet ist, wird überschüssiges Metallpulver grundsätzlich nach unten abgeführt. Dies kann durch die erfindungsgemäße Absaugeinrichtung unterstützt werden, wobei insbesondere verhindert wird, dass Metallpulver in übermäßigem Maß in die Luftabführung gelangt. Insgesamt kann bei dieser Anordnung eine sehr exakte Beschichtung erreicht werden.

Ein besonders effizientes Beschichten wird nach der Erfindung dadurch erzielt, dass in dem Arbeitsraum des Gehäuses mindestens zwei Auftragseinrichtungen angeordnet sind, welche zum gleichzeitigen Aufbringen und Aufschmelzen von Metallpulver ausgebildet sind. Zwei oder mehrere Auftragseinrichtungen können gleichzeitig ein Metallpulver aufbringen und aufschmelzen. So kann eine besonders kurze Bearbeitungszeit erzielt werden.

Besonders zweckmäßig ist es nach einer Weiterbildung der Erfindung, dass zwei Auftragseinrichtungen vorgesehen sind, durch welche gleichzeitig an einem Werkstück eine Beschichtung auftragbar ist. Das eine Werkstück kann dabei horizontal oder vertikal angeordnet sein. Durch zwei oder mehr Auftragseinrichtungen, welche gleichzeitig ein Werkstück beschichten, kann eine besonders kurze Bearbeitungszeit je Werkstück erzielt werden. Bei dieser Anordnung kann eine Absaugeinrichtung mit jeweils mindestens einer Absaugöffnung je Auftragseinrichtung vorgesehen sein. Die Absaugöffnung kann dabei insbesondere im Nahbereich zu jeder Auftragseinrichtung angeordnet sein.

Bei der erfindungsgemäßen Beschichtungsvorrichtung ist vorgesehen, dass mindestens zwei Werkstücke in dem Arbeitsraum angeordnet sind und gleichzeitig von zumindest jeweils einer Auftragseinrichtung beschichtbar sind. Die Werkstücke können dabei an getrennten Halteeinrichtungen oder vorzugsweise an einer gemeinsamen Halteeinrichtung angeordnet sein, welche die mindestens zwei Werkstücke gemeinsam tragen. Die Halteeinrichtung kann dabei insbesondere auf einer Transportpalette angeordnet sein, mit welcher die Werkstücke in und aus der Beschichtungsvorrichtung gemeinsam transportiert werden. Durch die Aufnahme von zumindest zwei Werkstücken in einer Beschichtungsvorrichtung kann diese besonders effektiv genutzt werden, einschließlich der notwendigen Einrichtung zum Zuführen des Metallpulvers sowie zum Abführen des nicht verbrachten Metallpulvers und hinsichtlich der Absaugeinrichtung.

Eine besonders vorteilhafte Ausgestaltung der Erfindung kann darin gesehen werden, dass die Absaugeinrichtung ein hohlkörperartiges Gehäuse mit einer Aufnahmeöffnung umfasst, in welcher zumindest teilweise das mindestens eine Werkstück beim Beschichten angeordnet ist. Die Aufnahmeöffnung für das Werkstück ist an einer Außenkontur des Werkstücks angepasst. Die Aufnahmeöffnung ist dabei so ausgebildet, dass sich diese von einer Oberseite bis zu einer Unterseite des Werkstücks erstreckt.

Grundsätzlich kann die Absaugeinrichtung mit dem hohlkörperartigen Gehäuse in einer beliebigen Form ausgebildet sein. Besonders vorteilhaft ist es nach einer Weiterbildung der Erfindung, dass das hohlkörperartige Gehäuse etwa scheibenförmig ausgebildet ist. Das Gehäuse ist also etwa in der Art eines flachen Hohlzylinders ausgebildet, wobei an einem Umfangsbereich eine Aufnahmeöffnung eingebracht ist.

Weiterhin ist es nach einer Ausführungsvariante der Erfindung vorteilhaft, dass das hohlkörperartige Gehäuse in einem oberen Abschnitt Einlassschlitze und in einem unteren Abschnitt mindestens eine Austrittsöffnung aufweist. Durch obere Einlassschlitze kann eine verbesserte Umströmung des Werkstücks erzielt werden, da beim Absaugen nicht nur Luft im Bereich der Aufnahmeöffnung von außen eingesaugt wird, sondern auch eine gezielte Strömung innerhalb des hohlkörperartigen Gehäuses von oben nach unten bewirkt wird.

Ein besonders gutes Absaugergebnis kann zudem dadurch erzielt werden, dass die Absaugöffnung der Absaugeinrichtung relativ zum Werkstück bewegbar ist. Dabei kann entweder das Gehäuse insgesamt oder ein entsprechender Teil des Gehäuses, in welchem die Absaugöffnung angeordnet ist, verstellt und bewegt werden.

Ein besonders gutes Absaugen kann weiter dadurch erreicht werden, dass die Absaugöffnung der Absaugeinrichtung ringförmig um die Auftragsdüse der Auftragseinrichtung ausgebildet und mit dieser relativ zum Werkstück bewegbar ist. Somit wird die Absaugöffnung der Absaugeinrichtung bedarfsgerecht der Bewegung der Auftragsdüse der Auftragseinrichtung nachgestellt.

Hinsichtlich des Verfahrens ist die Erfindung durch die Merkmale des Anspruchs 11 gekennzeichnet.

Das erfindungsgemäße Verfahren wird durch die zuvor beschriebene Beschichtungsvorrichtung durchgeführt. Es können dabei die zuvor beschriebenen Vorteile erzielt werden.

Nachfolgend wird die Erfindung anhand von bevorzugten Ausführungsbeispielen näher erläutert, welche schematisch in den Zeichnungen dargestellt sind. In den Zeichnungen zeigen:
- Fig.1: eine schematische Darstellung einer erfindungsgemäßen Anlage mit einer Modulgruppe;
- Fig. 2: eine schematische Darstellung einer ersten Anordnung zum Beschichten eines Werkstücks;
- Fig. 3: eine perspektivische Ansicht einer weiteren erfindungsgemäßen Anlage mit mehreren Modulgruppen gemäß Fig. 1;
- Fig. 4: eine perspektivische Ansicht einer zweiten Anordnung zum Beschichten;
- Fig. 5: eine schematische Darstellung einer dritten Anordnung zum Beschichten;
- Fig. 6: eine schematische Darstellung einer vierten Anordnung zum Beschichten;
- Fig. 7: eine schematische Querschnittsansicht zu einer ersten Absaugeinrichtung;
- Fig. 8: eine perspektivische Ansicht eines Gehäuses zu einer zweiten Absaugeinrichtung; und
- Fig. 9: eine perspektivische Ansicht zu einer Beschichtungsvorrichtung mit einer Absaugeinrichtung.

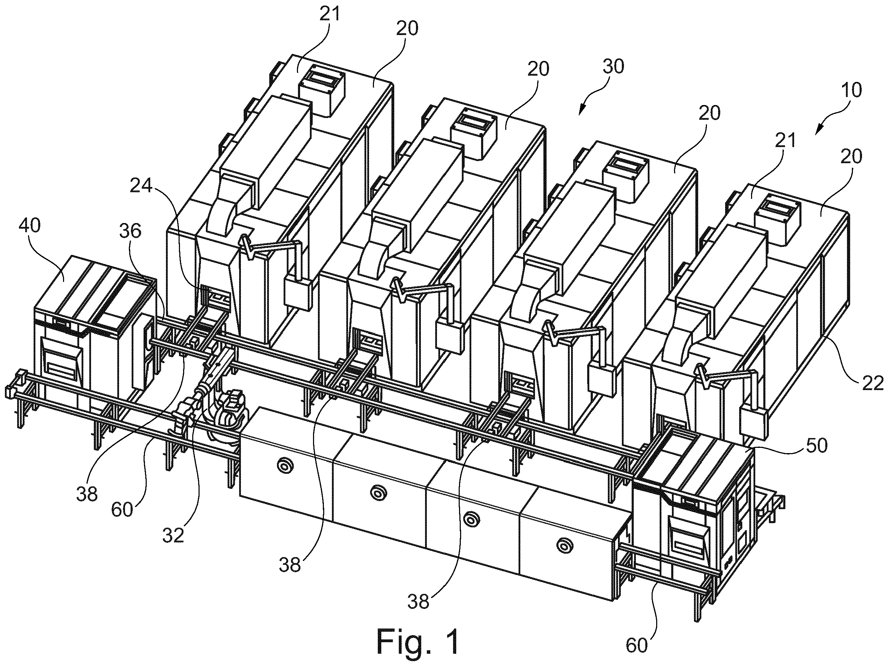

Ein erstes Ausführungsbeispiel einer erfindungsgemäßen Anlage 10 ist in Fig. 1 dargestellt. Diese umfasst vier Beschichtungsvorrichtungen 20, welche in einer Parallelanordnung nebeneinander eine Modulgruppe 30 bilden. Der Modulgruppe 30 vorgeschaltet ist eine Eingangsmessstation 40, zu welcher hier nicht dargestellte Werkstücke mittels einer Hauptfördereinrichtung 60 zugefördert werden. Mittels einer Handhabungseinrichtung 32, welche im vorliegenden Ausführungsbeispiel als ein Mehrachsroboter ausgeführt ist, werden die Werkstücke von der Hauptfördereinrichtung 60 ergriffen und der kastenförmigen Eingangsmessstation 40 zugeführt.

In der Eingangsmessstation 40 werden die Werkstücke vermessen, insbesondere eine zu beschichtende Oberfläche. Hierbei kann insbesondere eine Oberflächenstruktur der zu beschichtenden Fläche erfasst werden, wobei insbesondere Höhen und Tiefen in der Oberfläche erfasst und vermessen werden.

Anschließend kann das vermessene Werkstück aus der Eingangsmessstation 40 über die Handhabungseinrichtung 32 oder direkt aus der Eingangsmessstation 40 an eine lineare Fördereinrichtung 36 übergeben werden, welche entlang den Beschichtungsvorrichtungen 20 verläuft. Vor jeder Beschichtungsvorrichtung 20 ist an der als Linearförderer ausgebildeten Fördereinrichtung 36 eine Zuführeinrichtung 38 angeordnet, mit welcher ein Werkstück über eine Eintrittsöffnung 24 in einen Arbeitsraum 23 eines kastenförmigen Gehäuses 21 der ausgewählten Beschichtungsvorrichtung 20 eingeführt wird.

Die Beschichtungsvorrichtungen 20 sind gleich oder im Wesentlichen gleich ausgebildet und weisen einen Transportrahmen 22 auf. Mit diesem Transportrahmen 22 können die Beschichtungsvorrichtungen 20 mit einem Hallenkran oder einem Hubstapler bewegt und versetzt werden. Dies ermöglicht es, etwa im Falle einer Kapazitätsänderung zusätzliche Beschichtungsvorrichtungen 20 zuzufügen oder abzuführen oder zu Reparatur- oder Wartungszwecken eine bestehende Beschichtungsvorrichtung 20 durch eine neue Beschichtungsvorrichtung 20 auszutauschen.

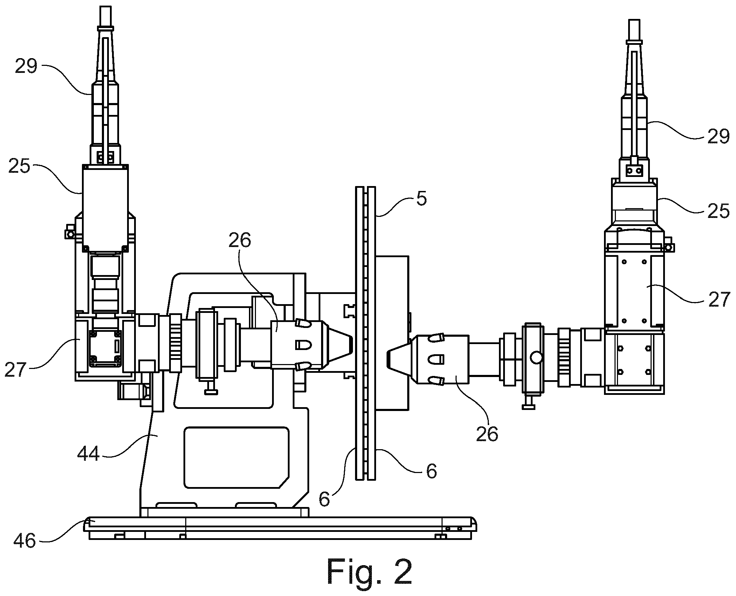

In der Beschichtungsvorrichtung 20 wird mindestens eine Fläche des Werkstücks 5 mit einer metallischen Beschichtung versehen, wie nachfolgend näher im Zusammenhang mit Fig. 2 erläutert werden wird. Nach der Beschichtung wird das Werkstück 5 durch die Eintrittsöffnung 24 zurück auf die Fördereinrichtung 36 geleitet. Dies kann ebenfalls mit der Zuführeinrichtung 38 erfolgen. Durch die Fördereinrichtung 36 wird das beschichtete Werkstück 5 zu einer gemeinsamen Ausgangsmessstation 50 transportiert, in welcher die beschichtete Oberfläche des Werkstücks 5 vermessen wird. Nach diesem abschließenden Vermessen in der Ausgangsmessstation 50 wird das Werkstück zurück auf die Hauptfördereinrichtung 60 gesetzt, mit welcher das Werkstück 5 zu einer weiteren Bearbeitung gefördert werden kann. Das Übertragen des Werkstücks 5 von der Fördereinrichtung 36 in die Ausgangsmessstation 50 und wieder auf die Hauptfördereinrichtung 60 kann ebenfalls über eine Handhabungseinrichtung 32 wie an der Eingangsmessstation 40 erfolgen, wobei diese in Fig. 1 nicht dargestellt ist.

Die in der Eingangsmessstation 40 ermittelten Messwerte zu einem bestimmten Werkstück 5 werden an eine zentrale Steuereinrichtung übermittelt. Durch die Steuereinrichtung wird auch die Fördereinrichtung 36 mit der jeweiligen Zuführeinrichtung 38 gesteuert, so dass das vermessene Werkstück 5 einer bestimmten Beschichtungsvorrichtung 20 der Modulgruppe 30 zugeleitet wird. Gleichzeitig werden der ausgewählten oder bestimmten Beschichtungsvorrichtung 20 von der Steuereinrichtung die Messwerte des bestimmten Werkstückes 5 zugeleitet, so dass eine Beschichtung des Werkstücks 5 abhängig von den Eingangsmesswerten erfolgen kann. Nach dem Beschichten wird das Werkstück in der kastenförmigen Ausgangsmessstation 50 vermessen, wobei die ermittelten Messwerte ebenfalls der zentralen Steuereinrichtung und dem Datensatz zu dem bestimmten Werkstück zugeleitet werden. In der Steuereinrichtung kann ein Vergleich der Eingangsmesswerte und der Ausgangsmesswerte sowie der Beschichtungsparameter durchgeführt werden, um festzustellen, ob eine korrekte Beschichtung erfolgt ist. Gegebenenfalls kann durch die Steuereinrichtung eine Nachstellung von Betriebsparametern einer Beschichtungsvorrichtung 20 beim Beschichten durchgeführt werden.

Gemäß Fig. 2, welche nicht erfindungsgemäß ist, kann als zu beschichtendes Werkstück 5 ein scheibenförmiges Element vorgesehen sein, insbesondere eine Bremsscheibe mit einer oder zwei zu beschichtenden Werkstückflächen 6. Das Aufbringen der metallischen Beschichtung kann über eine Auftragsdüse 26 einer Auftragseinrichtung 25 mittels Laserauftragsschweißen durchgeführt werden. Die Auftragsdüse 26 ist an einem Träger 27 angeordnet. Beim Auftragsschweißen wird zunächst Beschichtungsmaterial, insbesondere ein Metallpulver, aufgebracht und dann mittels Laser lokal aufgeschmolzen. Dabei kann das Beschichten in mehreren Schritten und in mehreren Schichten erfolgen. Insbesondere können die Schichten auch mit unterschiedlichen Schichtdicken mit unterschiedlichen Materialien und unterschiedlichen Verfahren aufgebracht werden, um gewünschte Eigenschaften zu erreichen, insbesondere hinsichtlich Anhaftung, Abriebfestigkeit und/oder Korrosionsbeständigkeit. Der Laser der Auftragseinrichtung 25 kann im Bereich der Auftragsdüse 26 angeordnet sein.

Nach der Erfindung ist es möglich, die Beschichtung mit zwei oder mehreren Auftragseinrichtungen 25 vorzunehmen, wobei die Auftragsdüsen 26 jeweils mittels eines Trägers 27 entlang der zu beschichtenden Werkstückflächen 6 mittels einer Bewegungseinrichtung 29, etwa von Linearmotoren, verfahren wird. Beim Laserauftragsschweißen gemäß Fig. 2 sind zwei Beschichtungseinrichtungen 25 gegenüberliegend angeordnet, wobei gegenüberliegende Seiten eines vertikal angeordneten Werkstücks 5 gleichzeitig beschichtet werden. Das Werkstück 5 wird dabei drehbar an einer Halteeinrichtung 44 auf einer Transportpalette 46 gehalten.

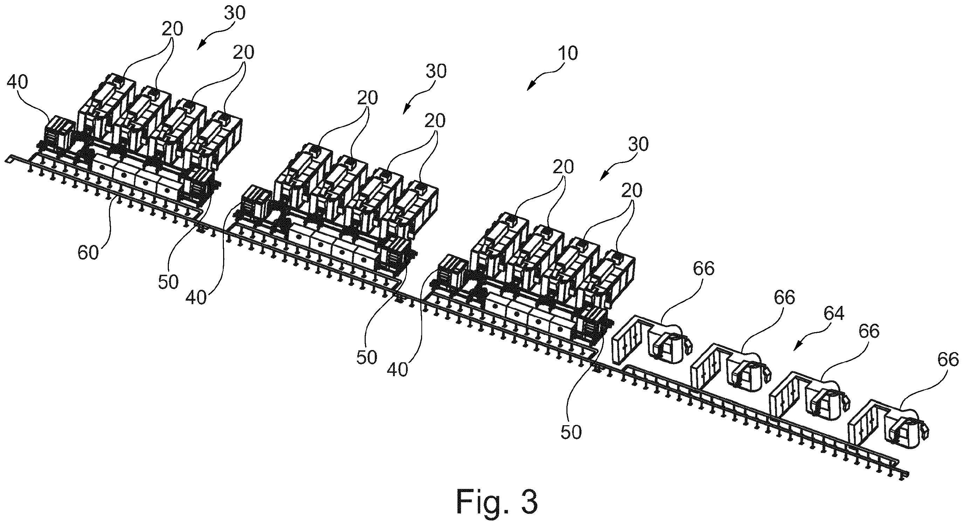

Eine Weiterbildung einer erfindungsgemäßen Anlage 10 mit insgesamt drei Modulgruppen 30 aus je vier Beschichtungsvorrichtungen 20 ist in Fig. 3 dargestellt. Die einzelnen Modulgruppen 30 sind dabei entsprechend dem Ausführungsbeispiel gemäß Fig. 1 ausgebildet, wobei in jeder Modulgruppe 30 eine Eingangsmessstation 40 und eine Ausgangsmessstation 50 zugeordnet sind.

Die insgesamt drei Modulgruppen 30 sind entlang einer linearen Hauptfördereinrichtung 60 angeordnet, so dass bei dieser Parallelanordnung eine parallele Bearbeitung von Werkstücken in den einzelnen Modulgruppen 30 und in den einzelnen Bearbeitungsvorrichtungen 20 erfolgen kann. Ein fertig beschichtetes Werkstück wird nach Durchgang durch die jeweilige Ausgangsmessstation 50 zurück auf die Hauptfördereinrichtung 60 geleitet, mit welcher das Werkstück einer Nachbearbeitungsstation 64 zugeleitet wird.

In dem dargestellten Ausführungsbeispiel gemäß Fig. 3 weist die Nachbearbeitungsstation 64 insgesamt vier parallel angeordnete Schleifvorrichtungen 66 auf. Mit den Schleifvorrichtungen 66 kann die mindestens eine beschichtete Fläche des Werkstücks abschließend bearbeitet und beschliffen werden. Um eine effiziente Nachbearbeitung sicherzustellen, können die erfassten Messwerte zu jedem Werkstück der bestimmten Schleifvorrichtung 66 in der Nachbearbeitungsstation 64 zugeleitet werden, welche zur Bearbeitung des Werkstücks von der Steuereinrichtung ausgewählt wurde. Abhängig beispielsweise von der erfassten Endhöhe der beschichteten Fläche des Werkstücks kann so eine effiziente Zustellung des Schleifwerkzeuges in der jeweiligen Schleifvorrichtung 66 an das Werkstück erfolgen.

Insbesondere aus dem Ausführungsbeispiel gemäß Fig. 3 ist zu ersehen, dass selbst bei größeren, eventuell notwendigen Kapazitätserweiterungen nicht nur einzelne Beschichtungsmodule 20 sondern ganze Modulgruppen 30 mit jeweils mehreren Beschichtungsmodulen 20 und zugehöriger Eingangsmessstation 40 und Ausgangsmessstation 50 einer Gesamtanlage ohne weiteres zugefügt werden können.

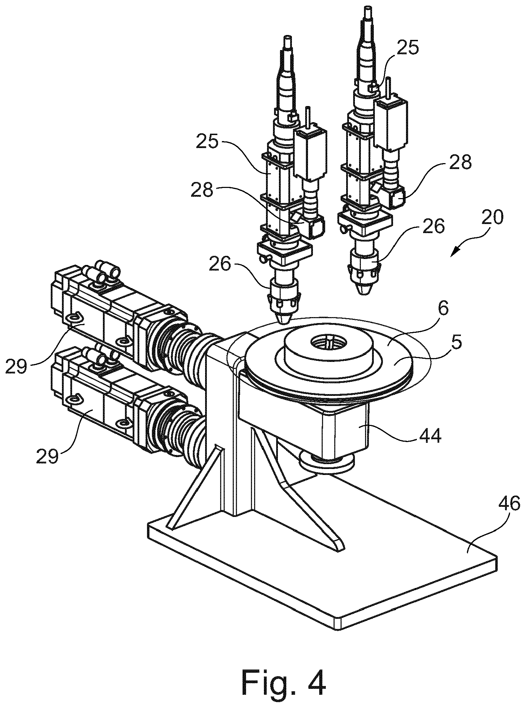

Eine weitere Beschichtungsvorrichtung 20 ist in Fig. 4, welche nicht erfindungsgemäß ist, dargestellt.

Bei dieser Beschichtungsvorrichtung 20 ist das Werkstück 5 an einer Halteeinrichtung 44 auf einer Transportpalette 46 so drehbar angeordnet, dass die zu beschichtende ringförmige Werkstückfläche 6 horizontal gerichtet ist. Über eine Bewegungseinrichtung 29, welche einen Dreh- und optional Linearmotoren aufweist, kann das Werkstück 5 an der Halteeinrichtung 44 in eine Drehbewegung und in eine radial gerichtete Linearbewegung versetzt werden. Oberhalb der zu beschichtenden Werkstückfläche 6 sind zwei Auftragseinrichtungen 25 mit jeweils einer Auftragsdüse 26 und einem Laser 28 angeordnete. Die Auftragseinrichtungen 25 können vertikal zum Werkstück 5 und soweit notwendig, auch in einer horizontalen Ebene verstellt werden. Bei dieser Beschichtungsvorrichtung 20 kann das Werkstück 5 gleichzeitig durch die zwei Auftragseinrichtungen 25 beschichtet werden.

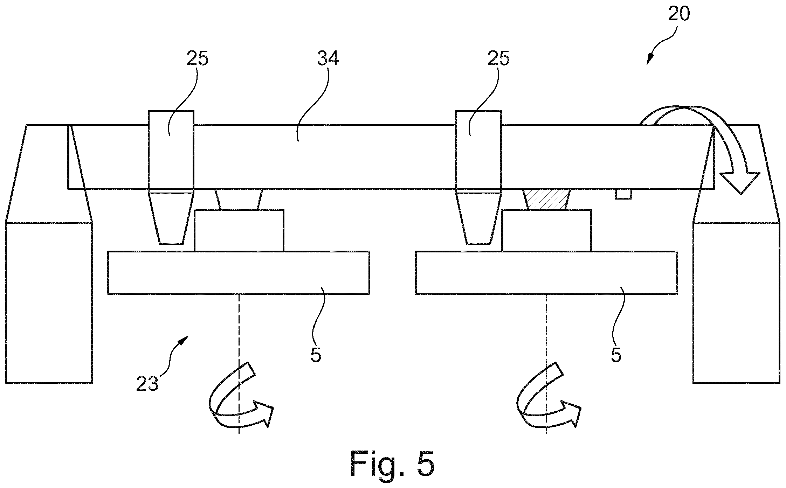

Gemäß Fig. 5 ist eine weitere Anordnungsvariante einer erfindungsgemäßen Beschichtungsvorrichtung 20 dargestellt. Bei dieser Beschichtungsvorrichtung 20 befinden sich gleichzeitig zwei Werkstücke 5 in einem Arbeitsraum 23. Die vorzugsweise rotationssymmetrischen Werkstücke 5 sind dabei drehbar um eine vertikale Drehachse angeordnet, wobei die Drehachsen jeweils parallel zueinander gerichtet sind. Die Werkstücke 5 werden dabei über jeweils eine Auftragseinrichtung 25 mit einer Beschichtung versehen. Die Auftragseinrichtungen 25 können an einem gemeinsamen Support 34 angeordnet sein, entlang welchem eine Linearbewegung der Auftragseinrichtungen 25 durchführbar ist. Der Support 34 kann auch zum gleichzeitigen Halten und Spannen der Werkstücke 6 in der Arbeitsposition vorgesehen sein, wobei der Support 34 selbst verstellbar, insbesondere verschwenkbar ist, wie durch einen Pfeil angedeutet wird.

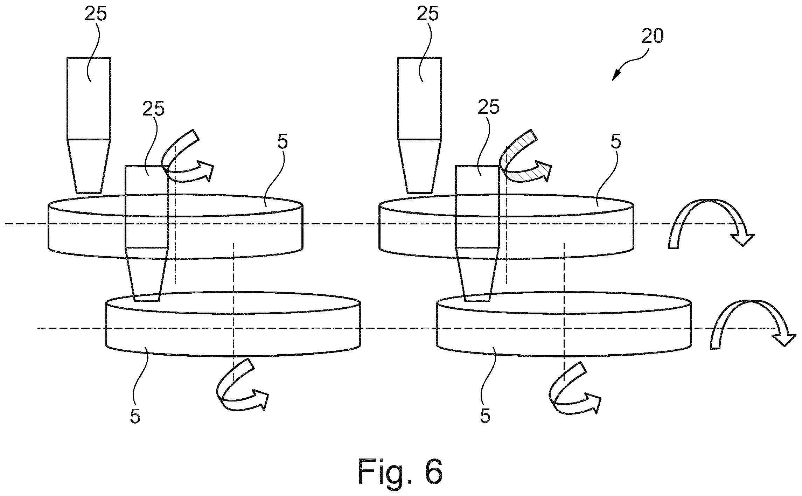

Gemäß Fig. 6 ist eine weitere erfindungsgemäße Beschichtungsvorrichtung 20 schematisch dargestellt, bei welcher vier Werkstücke gleichzeitig in einem Arbeitsraum der Beschichtungsvorrichtung 20 angeordnet sind. Die Werkstücke 5 sind dabei in einer horizontalen Anordnung parallel gerichtet zueinander jeweils um eine vertikale Drehachse drehbar gelagert. Jedes Werkstück 5 kann mit einer eigenen Beschichtungsvorrichtung 25 beschichtet werden.

Zum Durchführen einer Beschichtung auf beiden Seiten können die Werkstücke 5 jeweils in einer gemeinsamen oder einer separaten Bewegung um eine horizontale Schwenkachse verschwenkt werden, so dass auch eine gegenüberliegende horizontale Fläche des Werkstücks 5 beschichtet werden kann.

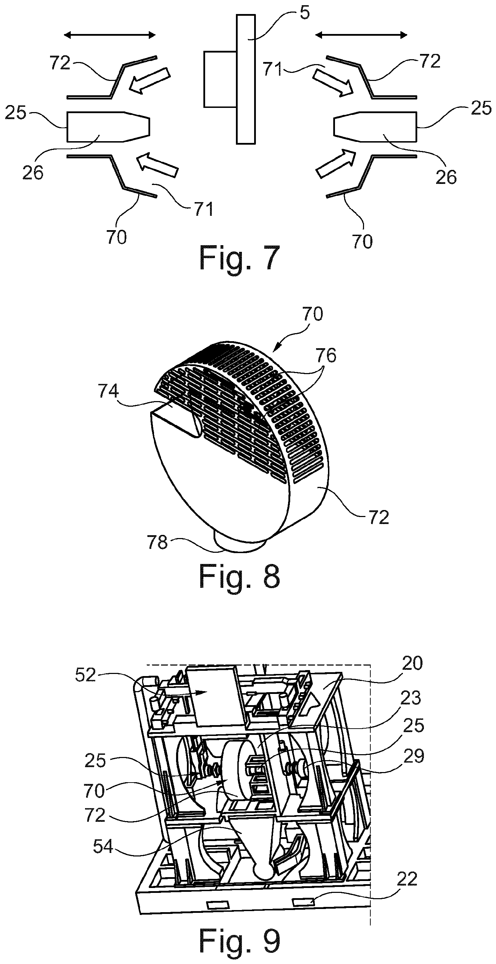

Eine Beschichtungsanordnung gemäß Fig. 7,welche nicht erfindungsgemäß ist, weist ein Werkstück 5 auf, welches gleichzeitig von zwei Seiten bei einer vertikalen Anordnung des Werkstücks 5 von zwei Auftragseinrichtungen 25 beschichtet werden kann. Jede Beschichtungseinrichtung 25 weist dabei eine Auftragsdüse 26 mit mindestens einem nicht näher dargestellten Laser auf, wobei die Auftragsdüse 26 koaxial von einem trichterförmigen Gehäuse 72 einer Absaugeinrichtung 70 umgeben ist. Das trichterförmige Gehäuse 72, welches sich in Richtung des Austritts der Auftragsdüse 26 konisch erweitert, ist in radialer Richtung von der Auftragsdüse 24 beabstandet, so dass ein ringförmiger Absaugkanal für eine Absaugöffnung 71 gebildet ist. Über diese Absaugöffnung 71 können beim Beschichten auftretende Stäube, Gase oder überschüssiges Metallpulver abgesaugt und vom Werkstück 5 abgeführt werden. Das Absaugen kann mittels einer nicht dargestellten Unterdruck-Erzeugungseinrichtung, insbesondere einer Pumpe oder einem Lüfter, entlang des Absaugweges erzeugt werden.

Eine weitere Absaugeinrichtung 70 ist schematisch in Fig. 8 dargestellt. Die Absaugeinrichtung 70 weist ein hohles, scheibenförmiges Gehäuse 72 auf, welches seitlich eine schlitzartige Aufnahmeöffnung 74 zum Anbringen eines Werkstücks 5 umfasst. In einem oberen Bereich des hohlkammerartigen Gehäuses 72 sind in der Vorder- und Hinterwand sowie an der ringförmigen Umfangswand längliche Einlassschlitze 76 eingebracht. Hierdurch kann Luft von oben in das Gehäuse 72 eintreten und ein zumindest teilweise in der Aufnahmeöffnung 74 angeordnetes Werkstück gezielt umströmen, um von dem Werkstück unerwünschte Stäube, Gase oder überschüssiges Material abzusaugen.

Das abgesaugte Material kann nach unten über eine Austrittsöffnung 78 aus dem Gehäuse 72 abgeführt werden. Abhängig von der Art der gewünschten Absaugung kann zur Umströmung des Werkstücks ausschließlich eine in der Beschichtungsvorrichtung vorgesehene Luftführung von oben nach unten ausreichend sein oder im Bereich der Austrittsöffnung 78 kann eine Unterdruck-Erzeugungseinrichtung zur Erzeugung einer zusätzlichen Absaugströmung angeschlossen sein.

In der teilgeschnittenen Ansicht einer Beschichtungsvorrichtung 20 gemäß Fig. 9, welche nicht erfindungsgemäß ist, ist auf einem Transportrahmen 22 ein von Gehäuseelementen umschlossener Arbeitsraum 23 vorgesehen, in welchem insgesamt zwei Auftragseinrichtungen 25 angeordnet sind, welche sich horizontal gegenüberliegend.

Beim Beschichten ist das Werkstück von einem Gehäuse 72 einer Absaugeinrichtung 70 umgeben, wobei das Gehäuse 72 zuvor in Fig. 8 näher dargestellt worden ist.

Oberhalb des hier nicht näher dargestellten Werkstücks ist eine Luftzuführung 52 in Form eines flachen Kanals angeordnet, aus welcher Luft über einen schmalen rechteckigen Öffnungsquerschnitt etwa parallel zu den Auftragseinrichtungen 25 in den Arbeitsraum 23 einströmt. An einer Unterseite des Arbeitsraums 23 ist eine trichterartige Luftabführung 54 angeordnet, so dass eine gezielte Luftumströmung des Werkstücks und eine gezielte Durchströmung des Arbeitsraums 23 von oben nach unten bewirkt wird. Die Luft kann so auch zum Kühlen des Arbeitsraumes 23 dienen.

Beim Beschichten kann eine Relativbewegung des Werkstücks zu den Auftragseinrichtungen 25 über eine Bewegungseinrichtung 29 bewirkt werden, welche im dargestellten Ausführungsbeispiel aus einem Drehantrieb mit einer Magnetkupplung besteht.

## Patentansprüche

1. Beschichtungsvorrichtung zum metallischen Beschichten von Werkstücken (5), mit
- einem Gehäuse (21), welches einen Arbeitsraum (23) umschließt,
- einer Halteeinrichtung (44) zum Halten mindestens eines Werkstücks (5) in dem Arbeitsraum (23),
- mindestens einer Auftragseinrichtung (25) mit einer Auftragsdüse (26) zum Aufbringen eines Metallpulvers auf eine zu beschichtende Werkstückfläche (6) und einen Laser zum lokalen Aufschmelzen des Metallpulvers auf der Werkstückfläche (6) zum Bilden einer Beschichtung,
- mindestens einer Bewegungseinrichtung (29), mit welcher die mindestens eine Auftragseinrichtung (25) beim Beschichten relativ zur Werkstückfläche (6) bewegbar ist,
- mindestens einer Luftzuführung (52) und
- mindestens einer Luftabführung (54),
wobei die Luftzuführung (52) in einem oberen Bereich des Arbeitsraums (23) oberhalb des Werkstücks (5) und die Luftabführung (54) in einem unteren Bereich des Arbeitsraums (23) unterhalb des Werkstücks (5) angeordnet ist, und
**dadurch gekennzeichnet,**
- **dass** mindestens zwei Werkstücke (5) in dem Arbeitsraum (23) angeordnet sind,
- **dass** die mindestens zwei Werkstücke (5) an der Halteeinrichtung (44) drehbar angeordnet und über die Bewegungseinrichtung (29) in eine Drehbewegung versetzbar sind,
- **dass** in dem Arbeitsraum (23) des Gehäuses (21) mindestens zwei Auftragseinrichtungen (25) angeordnet sind, welche zum gleichzeitigen Aufbringen und Aufschmelzen von Metallpulver auf die Werkstücke (5) ausgebildet sind und die Werkstücke (5) gleichzeitig von zumindest jeweils einer Auftragseinrichtung (25) beschichtbar sind.

2. Beschichtungsvorrichtung nach Anspruch 1,
**dadurch gekennzeichnet,**
**dass** die zu beschichtende Werkstückfläche (6) horizontal angeordnet ist.

3. Beschichtungsvorrichtung nach Anspruch 1,
**dadurch gekennzeichnet,**
**dass** die zu beschichtende Werkstückfläche (6) vertikal angeordnet ist.

4. Beschichtungsvorrichtung nach einem der Ansprüche 1 bis 3,
**dadurch gekennzeichnet,**
**dass** zusätzlich mindestens eine Absaugeinrichtung (70) mit mindestens einer Absaugöffnung (71) vorgesehen ist, welche nahe am Werkstück (5) angeordnet ist.

5. Beschichtungsvorrichtung nach einem der Ansprüche 1 bis 4,
**dadurch gekennzeichnet,**
**dass** zumindest zwei Auftragseinrichtungen (25) vorgesehen sind, durch welche gleichzeitig an einem Werkstück (5) eine Beschichtung auftragbar ist.

6. Beschichtungsvorrichtung nach einem der Ansprüche 4 oder 5,
**dadurch gekennzeichnet,**
**dass** die Absaugeinrichtung (70) ein hohlkörperartiges Gehäuse (72) mit einer Aufnahmeöffnung (74) umfasst, in welcher zumindest teilweise das mindestens eine Werkstück (5) beim Beschichten angeordnet ist.

7. Beschichtungsvorrichtung nach Anspruch 6,
dadurch **gekennzeich net**,
dass das hohlkörperartige Gehäuse (72) in einem oberen Abschnitt Einlassschlitze (76) und in einem unteren Abschnitt mindestens eine Austrittsöffnung (78) aufweist.

8. Beschichtungsvorrichtung nach Anspruch 6 oder 7,
**dadurch gekennzeichnet,**
**dass** das hohlkörperartige Gehäuse (72) etwa scheibenförmig ausgebildet ist.

9. Beschichtungsvorrichtung nach einem der Ansprüche 4 bis 8,
**dadurch gekennzeichnet,**
**dass** die Absaugöffnung (71) der Absaugeinrichtung (70) relativ zum Werkstück (5) bewegbar ist.

10. Beschichtungsvorrichtung nach einem der Ansprüche 4 bis 9,
**dadurch gekennzeichnet,**
**dass** die Absaugöffnung (71) der Absaugeinrichtung (70) ringförmig um die Auftragsdüse (26) der Auftragseinrichtung (25) ausgebildet und mit dieser relativ zum Werkstück (5) bewegbar ist.

11. Verfahren zum metallischen Beschichten von Werkstücken (6) mit einer Beschichtungsvorrichtung (20) nach einem der Ansprüche 1 bis 10, bei dem
- mindestens ein Werkstück (5) mit einer Halteeinrichtung (44) in einem Gehäuse (21) in einem Arbeitsraum (23) gehalten wird,
- eine Werkstückfläche (6) mit mindestens einer Auftragseinrichtung (25) beschichtet wird, wobei mit der Auftragsdüse (26) der mindestens einen Auftragseinrichtung (25) ein Metallpulver auf eine zu beschichtende Werkstückfläche (6) aufgebracht und mittels eines Lasers der mindestens einen Auftragseinrichtung (25) das aufgebrachte Metallpulver lokal auf der Werkstückfläche (6) aufgeschmolzen wird, wobei sich eine metallische Beschichtung bildet,
- die mindestens eine Auftragseinrichtung (25) beim Beschichten mittels mindestens einer Bewegungseinrichtung (29) relativ zur Werkstückfläche (6) bewegt wird, und
- über mindestens eine Luftzuführung (52) Luft in den Arbeitsraum (23) zugeführt und über mindestens eine Luftabführung (54) Luft aus dem Arbeitsraum (23) abgeführt wird,
wobei ein Zuführen von Luft über die Luftzuführung (52) in einem oberen Bereich des Arbeitsraumes (23) oberhalb des Werkstücks (5) und ein Abführen von Luft über die Luftabführung (54) in einem unteren Bereich des Arbeitsraumes (23) unterhalb des Werkstücks (5) erfolgt,
**dadurch gekennzeichnet,**
- **dass** mindestens zwei Werkstücke (5) in dem Arbeitsraum (23) angeordnet werden,
- **dass** die mindestens zwei Werkstücke (5) an der Halteeinrichtung (44) drehbar angeordnet und über die Bewegungseinrichtung (29) in eine Drehbewegung versetzt werden,
- **dass** in dem Arbeitsraum (23) des Gehäuses (21) mindestens zwei Auftragseinrichtungen (25) angeordnet sind, welche zum gleichzeitigen Aufbringen und Aufschmelzen von Metallpulver auf den Werkstücken (5) eingesetzt werden.

12. Verfahren nach Anspruch 11,
**dadurch gekennzeichnet,**
**dass** zusätzlich mittels mindestens einer Absaugeinrichtung (70) mit mindestens einer Absaugöffnung (71) Metallpulver und/oder Staub nahe an dem Werkstück (5) abgesaugt wird.

## Claims

1. Coating device for metal-coating of workpieces (5), comprising
- a housing (21), which surrounds a working space (23),
- a retaining apparatus (44) for retaining at least one workpiece (5) in the working space (23),
- at least one deposition apparatus (25) comprising a deposition nozzle (26) for applying a metal powder to a workpiece surface (6) to be coated, and a laser for locally melting the metal powder on the workpiece surface (6) to form a coating,
- at least one movement apparatus (29), by means of which the at least one deposition apparatus (25) can be moved relative to the workpiece surface (6) during the coating,
- at least one air supply (52) and
- at least one air discharge (54),
wherein the air supply (52) is arranged in an upper region of the working space (23) above the workpiece (5) and the air discharge (54) is arranged in a lower region of the working space (23) below the workpiece (5), and is **characterised**
- **in that** at least two workpieces (5) are arranged in the working space (23),
- **in that** the at least two workpieces (5) are arranged in a rotatable manner on the retaining apparatus (44) and can be set into a rotary motion by the movement apparatus (29),
- **in that** at least two deposition apparatuses (25) are arranged in the working space (23) in the housing (21), which apparatuses are designed to simultaneously apply and melt metal powder onto the workpieces (5) and the workpieces (5) can each be coated simultaneously by at least one deposition apparatuses (25).

2. Coating device according to claim 1,
**characterised in that**
the workpiece surface (6) to be coated is arranged horizontally.

3. Coating device according to claim 1,
**characterised in that**
the workpiece surface (6) to be coated is arranged vertically.

4. Coating device according to any of claims 1 to 3,
**characterised in that**,
in addition, at least one suction apparatus (70) with at least one suction opening (71) is provided, which is arranged close to the workpiece (5).

5. Coating device according to any of claims 1 to 4,
**characterised in that**
at least two deposition apparatuses (25) are provided, by means of which a coating can be deposited simultaneously on a workpiece (5).

6. Coating device according to any of claims 4 to 5,
**characterised in that**
the suction apparatus (70) comprises a hollow-body-like housing (72) comprising a receiving opening (74), in which the at least one workpiece (5) is arranged at least in part during coating.

7. Coating device according to claim 6,
**characterised in that**
the hollow-body-like housing (72) comprises inlet slots (76) in an upper portion and at least one outlet opening (78) in a lower portion.

8. Coating device according to claim 6 or 7,
**characterised in that**
the hollow-body-like housing (72) is approximately disc-shaped.

9. Coating device according to any of claims 4 to 8,
**characterised in that**
the suction opening (71) of the suction apparatus (70) can be moved relative to the workpiece (5).

10. Coating device according to any of claims 4 to 9,
**characterised in that**
the suction opening (71) of the suction apparatus (70) is designed to be annular around the deposition nozzle (26) of the deposition apparatus (25) and can be moved therewith relative to the workpiece (5).

11. Method for metal-coating workpieces (6) using a coating device (20) according to any of claims 1 to 10, in which
- at least one workpiece (5) is retained in a housing (21) in a working space (23) by means of a retaining apparatus (44),
- a workpiece surface (6) is coated by means of at least one deposition apparatus (25), wherein a metal powder is applied to a workpiece surface (6) to be coated by means of the deposition nozzle (26) of the at least one deposition apparatus (25) and the applied metal powder is locally melted on the workpiece surface (6) by means of a laser of the at least one deposition apparatus (25), with a metal coating being formed,
- the at least one deposition apparatus (25) is moved relative to the workpiece surface (6) during coating by means of at least one movement apparatus (29), and
- air is supplied into the working space (23) via at least one air supply (52) and is discharged from the working space (23) via at least one air discharge (54),
- wherein supplying air via the air supply (52) takes place in an upper region of the working space (23) above the workpiece (5) and discharging air via the air discharge (54) takes place in a lower region of the working space (23) below the workpiece (5),
**characterised**
- **in that** at least two workpieces (5) are arranged in the working space (23),
- **in that** the at least two workpieces (5) are arranged in a rotatable manner on the retaining apparatus (44) and can be set into a rotary motion by the movement apparatus (29),
- **in that** at least two deposition apparatuses (25) are arranged in the working space (23) in the housing (21), which apparatuses are used to simultaneously apply and melt metal powder onto the workpieces (5).

12. Method according to claim 11,
**characterised**
**in that**, in addition, metal powder and/or dust close to the workpiece (5) is suctioned away by means of at least one suction apparatus (70) comprising at least one suction opening (71).

## Revendications

1. Dispositif de revêtement pour le revêtement métallique de pièces (5), comprenant :
- un boîtier (21) qui délimite un espace de travail (23),
- un dispositif de maintien (44) pour maintenir au moins une pièce (5) à l'intérieur de l'espace de travail (23),
- au moins un dispositif d'application (25) comprenant une buse d'application (26) pour appliquer une poudre métallique sur une surface de pièce à revêtir (6) et un laser pour faire fondre localement la poudre métallique sur la surface de pièce (6) de manière à former un revêtement,
- au moins un dispositif de déplacement (29) à l'aide duquel lequel ledit au moins un dispositif d'application (25) peut être déplacé par rapport à la surface de pièce (6) pendant le revêtement,
- au moins une alimentation en air (52), et
- au moins une évacuation d'air (54),
dans lequel l'alimentation en air (52) est disposée dans une région supérieure de l'espace de travail (23) au-dessus de la pièce (5) et l'évacuation d'air (54) est disposée dans une région inférieure de l'espace de travail (23) en dessous de la pièce (5), et
**caractérisé en ce que**
- au moins deux pièces (5) sont disposées à l'intérieur de l'espace de travail (23),
- lesdites au moins deux pièces (5) sont agencées de façon rotative sur le dispositif de maintien (44) et peuvent être entraînées dans un mouvement de rotation par l'intermédiaire du dispositif de déplacement (29), et **en ce que**
- au moins deux dispositifs d'application (25) sont prévus à l'intérieur de l'espace de travail (23) du boîtier (21) et sont conçus de manière à appliquer et à faire fondre simultanément une poudre métallique sur les pièces (5), dans lequel les pièces (5) peuvent être revêtues simultanément par au moins un dispositif d'application (25) respectif.

2. Dispositif de revêtement selon la revendication 1, **caractérisé en ce que** la surface de pièce à revêtir (6) est agencée horizontalement.

3. Dispositif de revêtement selon la revendication 1, **caractérisé en ce que** la surface de pièce à revêtir (6) est agencée verticalement.

4. Dispositif de revêtement selon l'une quelconque des revendications 1 à 3, **caractérisé en ce qu'**il comprend en outre au moins un dispositif d'aspiration (70) comportant au moins une ouverture d'aspiration (71) qui est agencé à proximité de la pièce (5).

5. Dispositif de revêtement selon l'une quelconque des revendications 1 à 4, **caractérisé en ce qu'**il comprend au moins deux dispositifs d'application (25) par l'intermédiaire desquels un revêtement peut être appliqué simultanément sur une pièce (5).

6. Dispositif de revêtement selon l'une quelconque des revendications 4 ou 5, **caractérisé en ce que** le dispositif d'aspiration (70) comprend un boîtier en forme de corps creux (72) comportant une ouverture de réception (74) à l'intérieur de laquelle ladite au moins une pièce (5) est agencée au moins partiellement pendant le revêtement.

7. Dispositif de revêtement selon la revendication 6, **caractérisé en ce que** le boîtier en forme de corps creux (72) comporte des fentes d'entrée (76) dans une partie supérieure et au moins une ouverture de sortie (78) dans une partie inférieure.

8. Dispositif de revêtement selon la revendication 6 ou 7, **caractérisé en ce que** le boîtier en forme de corps creux (72) se présente approximativement sous la forme d'un disque.

9. Dispositif de revêtement selon l'une quelconque des revendications 4 à 8, **caractérisé en ce que** l'ouverture d'aspiration (71) du dispositif d'aspiration (70) peut être déplacée par rapport à la pièce (5).

10. Dispositif de revêtement selon l'une quelconque des revendications 4 à 9, **caractérisé en ce que** l'ouverture d'aspiration (71) du dispositif d'aspiration (70) se présente sous la forme d'un anneau autour de la buse d'application (26) du dispositif d'application (25) et peut être déplacée de concert avec celui-ci par rapport à la pièce (5).

11. Procédé de revêtement métallique de pièces (6) utilisant un dispositif de revêtement (20) selon l'une quelconque des revendications 1 à 10, dans lequel :
- au moins une pièce (5) est maintenue par un dispositif de maintien (44) à l'intérieur d'un espace de travail (23) dans un boîtier (21),
- une surface de pièce (6) est revêtue à l'aide d'au moins un dispositif d'application (25), dans lequel une poudre métallique est appliquée par l'intermédiaire de la buse d'application (26) dudit au moins un dispositif d'application (25) sur une surface de pièce à revêtir (6) et la poudre métallique appliquée est fondue localement sur la surface de pièce (6) à l'aide d'un laser dudit au moins un dispositif d'application (25) de manière à former ainsi un revêtement métallique,
- ledit au moins un dispositif d'application (25) est déplacé par rapport à la surface de pièce (6) pendant le revêtement à l'aide d'au moins un dispositif de déplacement (29), et
- de l'air est introduit à l'intérieur de l'espace de travail (23) par l'intermédiaire d'au moins une alimentation en air (52) et de l'air est évacué hors de l'espace de travail (23) par l'intermédiaire d'au moins une évacuation d'air (54),
dans lequel de l'air est introduit par l'intermédiaire de l'alimentation en air (52) dans une région supérieure de l'espace de travail (23) au-dessus de la pièce (5) et de l'air est déchargé par l'intermédiaire de l'évacuation d'air (54) dans une région inférieure de l'espace de travail (23) au-dessous de la pièce (5),
**caractérisé en ce que**
- au moins deux pièces (5) sont disposées à l'intérieur de l'espace de travail (23),
- lesdites au moins deux pièces (5) sont agencées de façon rotative sur le dispositif de maintien (44) et peuvent être entraînées dans un mouvement de rotation par l'intermédiaire du dispositif de déplacement (29), et **en ce que**
- au moins deux dispositifs d'application (25) sont prévus à l'intérieur de l'espace de travail (23) du boîtier (21) et sont utilisés pour appliquer et faire fondre simultanément une poudre métallique sur les pièces (5).

12. Procédé selon la revendication 11, **caractérisé en ce que** la poudre métallique et/ou la poussière est (sont) aspirée(s) à proximité de la pièce (5) à l'aide d'au moins un dispositif d'aspiration (70) qui comporte au moins une ouverture d'aspiration (71).
